(19)

Europäisches Patentamt
European Patent Office
Office européen des brevets

(11)  **EP 2 788 788 B1**

(12) # EUROPEAN PATENT SPECIFICATION

(45) Date of publication and mention of the grant of the patent:
**07.02.2018  Bulletin 2018/06**

(21) Application number: **12824829.1**

(22) Date of filing: **07.12.2012**

(51) Int Cl.:
*G01S 11/02* [(2010.01)]     *G01S 13/34* [(2006.01)]
*G01S 13/82* [(2006.01)]

(86) International application number:
**PCT/NL2012/050859**

(87) International publication number:
**WO 2013/085386 (13.06.2013 Gazette 2013/24)**

(54) **METHOD OF DETERMINING DISTANCE AND SPEED OF FMCW RADAR TERMINALS**

VERFAHREN ZUR BESTIMMUNG DER ENTFERNUNG UND DER GESCHWINDIGKEIT VON FMCW-RADARENDGERÄTEN

PROCÉDÉ PERMETTANT DE DÉTERMINER LA DISTANCE ET LA VITESSE DE TERMINAUX RADAR FMCW

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **08.12.2011  EP 11192648**

(43) Date of publication of application:
**15.10.2014  Bulletin 2014/42**

(73) Proprietor: **Nederlandse Organisatie voor toegepast-natuurwetenschappelijk onderzoek TNO 2595 DA 's-Gravenhage (NL)**

(72) Inventors:
• **ELFERINK, Franciscus Hendrikus NL-2628 VK Delft (NL)**
• **HOOGEBOOM, Peter NL-2628 VK Delft (NL)**

(74) Representative: **V.O. P.O. Box 87930 2508 DH Den Haag (NL)**

(56) References cited:
**WO-A1-2010/019975     US-A- 5 220 332 US-A1- 2006 044 179**

• **STELZER A ET AL: "Precise distance measurement with cooperative FMCW radar units", RADIO AND WIRELESS SYMPOSIUM, 2008 IEEE, IEEE, PISCATAWAY, NJ, USA, 22 January 2008 (2008-01-22), pages 771-774, XP031237276, ISBN: 978-1-4244-1462-8**

EP 2 788 788 B1

## Description

### Field of the invention

The present invention relates to the field of active FMCW radar systems, and more in particular to a method of determining the distance and/or speed of two terminals of such a system whose local oscillators are non-synchronous and/or experience relative frequency drift.

### Background

An *active* Frequency Modulated Continuous Wave (FMCW) radar system may typically include at least two spaced apart terminals: a first terminal A, which may be thought of as a transceiver, and a second terminal B, which may thought of as a transponder. In actuality, the two terminals may be structurally identical and merely temporarily assume the different roles of transceiver and transponder. An active FMCW radar system may be capable of measuring the distance and/or relative velocity between the terminals A and B.

To determine the distance between the two terminals A and B, terminal A may generate and transmit a stable frequency radio signal that is periodically modulated, for example with linear frequency sweeps or chirps, so that it varies gradually with time. Terminal B may then receive the signal transmitted by terminal A and generate a synchronized replica thereof, which it may actively transmit back to the terminal A (thus mimicking a reflector). At terminal A, the replica from terminal B may be received and mixed (multiplied) with the signal originally transmitted by terminal A. Because of the synchronization of the replica at terminal B, the signals mixed at terminal A will include a mutual time-shift that is equal to twice the round trip time. As a result, the mixed signal will define a beat signal at a so-called *beat frequency,* which is proportional to the distance between the two terminals A and B. The constant of proportionality follows from the characteristics of the transmit signal and is therefore known. This enables determination of the distance between the terminals A and B from the beat frequency, which itself is obtainable by a frequency spectrum analysis of the beat signal.

In case the two terminals A and B move at a mutual radial velocity, the above procedure requires adjustment to enable correction for the fact the signal received by terminal A includes a Doppler frequency-shift (which, due to the replication of the transmit signal at terminal B, is equal to twice the Doppler frequency). The correction may be applied by having terminal A generate and transmit a stable frequency radio signal that is periodically modulated not with simple frequency sweeps, but with triangular pulses, i.e. pulses including both a linear up-chirp and a corresponding linear down-chirp. When the synchronized replica is received back at A, and mixed with the transmit signal, the up-chirp and down-chirp related portions of the beat signal have a respective beat frequency whose difference is twice the Doppler frequency-shift. This can be understood as follows: in case the two terminals A and B are moving towards each other, the entire signal received by A will be moved to higher frequencies by the Doppler frequency-shift. Compared to the situation wherein the terminals are fixed in space, the frequency difference between the transmit signal and the (delayed) receive signal on the rising edge of the triangular pulse is reduced by the Doppler frequency-shift, and increased by the Doppler frequency-shift on the falling edge. Hence, halving the difference between the beat frequencies of the up- and down-chirp related portions of the beat signal yields the contribution of the Doppler frequency-shift, while averaging the beat frequencies of the up- and down-chirp related portions of the beat signal eliminates it and provides a beat frequency that is proportional to the distance between terminals A and B.

### Summary of the invention

The above-described practice of distance and relative velocity determination presumes that the replica sent by terminal B is a synchronized replica, modulated on the frequency on which it was received by terminal B. Here 'synchronized' may be construed to mean that the replica of an FMCW radar pulse is transmitted by terminal B in sync with the reception of an original pulse in the transmit signal by terminal B; i.e. the start of transmission of the replicated pulse and the start of the reception of the original pulse from and at the transponder, respectively, are simultaneous. In practice, however, the synchronization of the transmit signal and the replica may not be perfect due to a-synchronicity of the local oscillators of terminals A and B. Furthermore, the two signals may be modulated onto different carrier frequencies due to relative frequency drift in the employed oscillators. Using the above-described conventional signal analysis approach, the a-synchronicity and drift may lead to errors in the obtained data.

WO 2010/019,975-A1 (Stelzer et al.) discloses a method for the noncontact measurement of a distance between two measurement points, such as radar terminals. The method entails an exchange of radio signals between the terminals, and exclusively takes account of a possible a-synchronicity of the local oscillators of the terminals. The method does not allow for frequency shifts in the exchanged signals due to either relative frequency drift, or to Doppler effects as a result of relative motion of the terminals. It is an object of the present invention to overcome the above problem and to improve the method disclosed by WO'975, so as to provide for a method that enables determination of the distance *and* mutual velocity between two FMCW radar system terminals in case the local signal generators/oscillators of the terminals are a-synchronous *and* subject to relative frequency drift.

To this end the present invention is directed to a method of determining the distance between and/or relative velocity of a first FMCW radar terminal A and a second FMCW radar terminal B. The method comprises two measurement cycles. During the first measurement cycle, terminal A transmits a first locally generated periodic FMCW transmit signal, comprised of a repetition of a radar pulse, to terminal B; and terminal B receives the first transmit signal from terminal A as a first receive signal, and mixes it with a locally generated replica of the first transmit signal to produce a first beat signal. During the second measurement cycle, terminal B transmits a second locally generated periodic FMCW transmit signal, comprised of a repetition of a radar pulse, to terminal A; and terminal A receives the second transmit signal from terminal A as a second receive signal, and mixes it with a locally generated replica of the second transmit signal to produce a second beat signal. The method further comprises analyzing the frequency spectra of the first and second beat signals to determine their beat frequencies, and calculating the distance between and/or relative velocity of the FMCW radar terminals A and B from said determined beat frequencies.

These and other features and advantages of the invention will be more fully understood from the following detailed description of certain embodiments of the invention, taken together with the accompanying drawings, which are meant to illustrate and not to limit the invention.

Brief description of the drawings

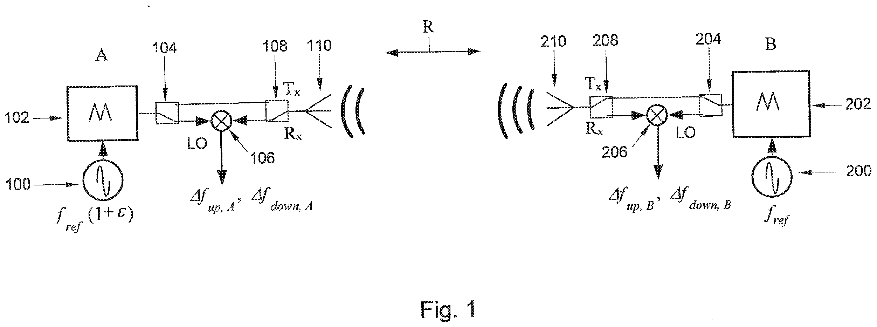

Fig. 1 schematically depicts an active FMCW radar system including two structurally identical terminals A and B, wherein terminal A is shown in receive mode while terminal B is shown in transmit mode;

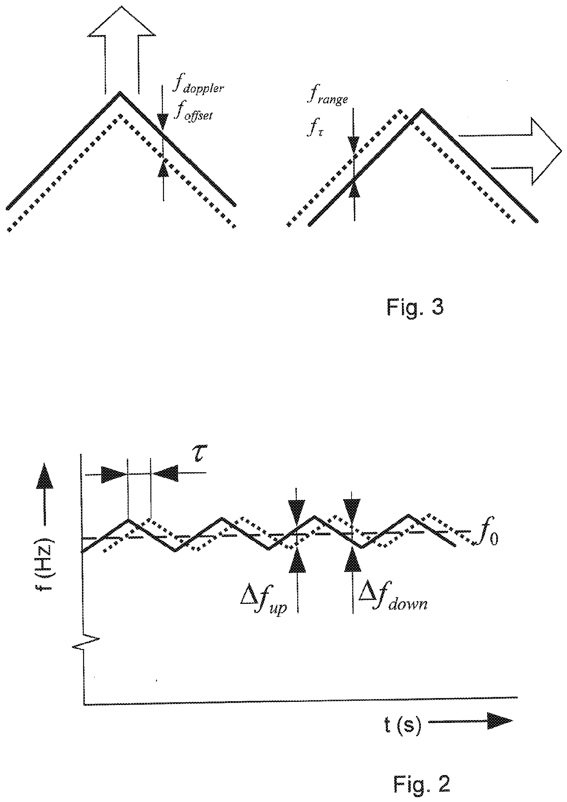

Fig. 2 schematically depicts an FMCW transmit signal (solid line), comprised of a repetition of a radar pulse with a triangular frequency-to-time characteristic centered on a frequency $f_0$, and a replica thereof (dotted line) which is delayed by a time interval $\tau$;

Fig. 3 schematically illustrates how, on the one hand (left graph), a Doppler frequency-shift of magnitude $f_{Doppler}$ due to relative radial velocity between two radar terminals and a frequency-shift of magnitude $f_\tau$ due to relative frequency drift between their local oscillators, and, on the other hand (right graph), a frequency-shift of magnitude $f_{range}$ due to the distance between the two terminals and a frequency-shift of magnitude $f_\tau$ due to a-synchronicity between their local oscillators, may affect the mutual relation between a transmit signal and a receive signal in qualitatively the same way; and

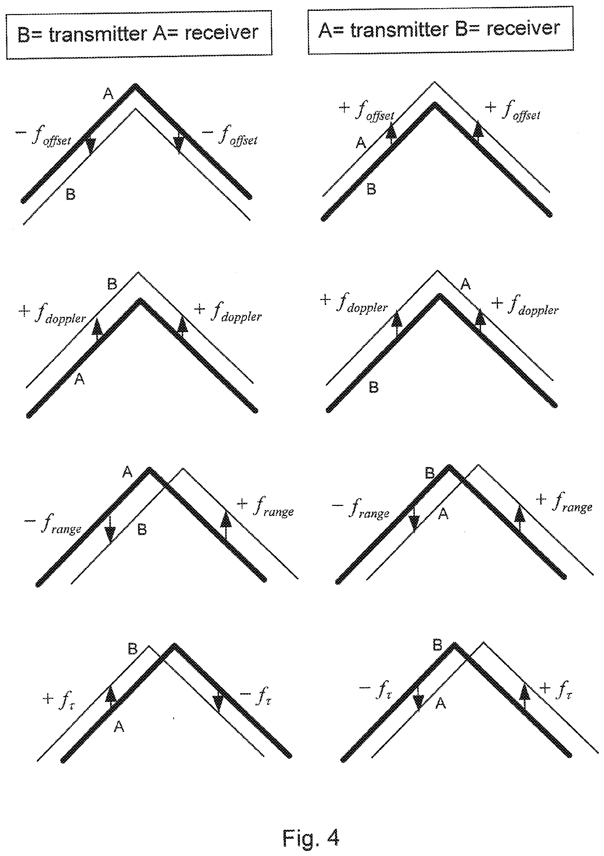

Fig. 4 schematically illustrates the effects of distance, relative velocity, a-synchronicity and frequency drift between the terminals A and B on the frequency differences $\Delta f_{up}$, $\Delta f_{down}$ (cf. Fig. 2) between the rising and falling edges of the transmit and receive signals for both the first measurement cycle (left side) and the second measurement cycle (right side) of the presently disclosed method.

Detailed description

In order to clarify the exposition of the present invention, the discussion thereof is preceded by a brief elucidation of the construction and operation of a conventional active FMCW radar system.

Fig. 1 schematically shows such a system including two terminals A and B, which are spaced apart by a distance R. The two terminals A and B may be structurally identical. Each may include a local oscillator 100, 200 that is operably connected to a modulator 102, 202 to form a signal generator for generating an FMCW radar signal comprised of a repetition of an FMCW radar pulse, for instance with a sawtooth or triangular frequency-to-time relationship. Each of the terminals A, B may further include an antenna 110, 210 that may be employed for both transmitting the locally generated FMCW radar signal, and receiving a signal generated and transmitted by the other of the terminals. The antenna 110, 210 may be connected to an output of the modulator 102, 202 of the respective signal generator via an assembly comprising two switches (104, 108), (204, 208). The two switches (104, 108), (204, 208) may enable the terminals A, B to be switched between a transmit mode and a receive mode. In Fig. 1, terminal A is shown in receive mode, while terminal B is shown in transmit mode. In transmit mode, the output of the modulator 102, 202 is coupled to the antenna 110, 210 for transmission of the locally generator FMCW radar signal. In receive mode the output of the modulator 102, 202 is coupled to a first input of a mixer 106, 206, while the signal received by the antenna 110, 210 is simultaneously fed to a second input of the mixer. The mixer may mix (i.e. multiply) the locally generated FMCW radar signal and the received signal to produce a beat signal, whose frequency spectrum includes one or more beat frequencies indicative of the time- and frequency relationship between the mixed signals. To analyze the frequency spectrum of the beat signal, the terminals may be fitted with an A/D-converter and a Discrete Fourier Transform-processor (not shown), or any other suitable equipment.

By way of demonstration, the two terminals A, B may be considered to be set up to determine the distance $R$ between them, as well as their relative (radial) velocity. The method to do so was set out in the background section of this application, and is assumed here to make use of triangular FMCW radar pulses. For ease of exposition, it is further assumed that the respective local signal generators of the terminals A, B are synchronized, and frequency drift of the signal generators is absent.

Fig. 2 schematically depicts the two signals that are input into the mixer 106 of terminal A: the transmit signal locally generated by terminal A (solid line), and the receive signal from terminal B (dotted line). As the figure illustrates, the latter signal is a replica of the former, but it has been delayed by $\tau$ seconds, i.e. the time it takes the radar signals to make the round trip between the terminals A and B. Due to the linear nature of the triangular pulses, the time-shift of $\tau$ seconds is proportional to a frequency difference of $\Delta f_{up}$ Hz between the rising flanks of the triangular pulses of the two signals, and a frequency difference of $\Delta f_{down}$ Hz between their falling flanks. As can be seen in Fig. 2, the two signals are centered on the same frequency $f_0$, indicating that the two terminals A and B have a zero relative velocity. Accordingly, the frequency differences $\Delta f_{up}$, $\Delta f_{down}$ have the same magnitude $f_{range}$, which is proportional to the distance $R$ between the terminals A and B. They may be identified by analyzing the beat signal output from the mixer 106, which includes $\Delta f_{up}$, $\Delta f_{down}$ as the so-called beat frequencies.

In an alternative, non-illustrated case wherein the two terminals A and B include a mutual velocity with a non-zero radial component, the entire receive signal is shifted in frequency by a Doppler frequency-shift of magnitude $f_{Doppler}$. If the two terminals A and B approach each other, the frequency shift is positive such that the receive signal has a greater center frequency $f_0$ than the transmit signal. If, on the other hand, the two terminals A and B move away from each other, the frequency-shift is negative such that the receive signal has a smaller center frequency $fo$ than the transmit signal. Consequently, the frequency differences $\Delta f_{up}$, $\Delta f_{down}$ may generally be expressed with relative signs as:

$$\Delta f_{up} = -f_{range} + f_{Doppler}$$
$$\Delta f_{down} = f_{range} + f_{Doppler} \tag{1}$$

As was already mentioned in the background section, this means that halving the difference between the frequency differences $\Delta f_{up}$, $\Delta f_{down}$ gives the contribution of the Doppler frequency-shift $f_{Doppler}$, while averaging the frequency differences $\Delta f_{up}$, $\Delta f_{down}$ eliminates it and provides the frequency-shift that is proportional to the distance $R$ between terminals A and B:

$$\frac{1}{2}(\Delta f_{down} - \Delta f_{up}) = \frac{1}{2}((f_{range} + f_{Doppler}) - (-f_{range} + f_{Doppler})) = f_{range}$$
$$\frac{1}{2}(\Delta f_{up} + \Delta f_{down}) = \frac{1}{2}((-f_{range} + f_{Doppler}) + (f_{range} + f_{Doppler})) = f_{Doppler} \tag{2}$$

Conventional active FMCW radar systems configured to perform distance and/or velocity measurements are essentially based on the above approach, and rely on the fact that the local signal generators of the radar system's terminals are synchronized and devoid of a relative frequency drift. To ensure synchronicity the terminals may be equipped with costly ultrastable oscillators, but even these may run astray in the long term.

The present invention proposes a method that enables the determination of the distance and/or relative radial velocity between two terminals of an active FMCW radar system irrespective of a-synchronicity and relative frequency drift of the respective local signal generators. In particular relatively small a-synchronicities and frequency drifts may be successfully dealt with, i.e. a-synchronicities that are small compared to the duration of a single FMCW radar pulse, and frequency drifts that are small compared to the bandwidth of a single FMCW radar pulse.

To understand the proposed method, a basic understanding of the nature and effect of a-synchronicity and relative frequency drift is key.

Two radar system terminals A and B may be said to be a- or nonsynchronous in case their local oscillators are out of sync. In practice this may mean that if the two terminals A, B are located at the same position (i.e. $R=0$), and terminal A generates and transmits an FMCW radar signal that is received by terminal B, mixing (at terminal B) of the signal received by B with a locally generated replica thereof yields a beat signal with a non-zero beat frequency. I.e. the received signal and the local replica include a mutual time-shift, much like the situation depicted in Fig. 2. If the two terminals are spaced apart (i.e. $R \neq 0$), the time-shift due to a-synchronicity comes on top of the time-shift that is incurred as a result of the inter-terminal distance. Just as the latter time-shift gives rises to a frequency-shift of magnitude $f_{range}$,

the former gives rise to a frequency-shift of magnitude $f_\tau$. The right graph in Fig. 3 graphically illustrates how the frequency-shift of magnitude $f_{range}$ due to the distance between the terminals, and the frequency-shift of magnitude $f_\tau$ due to a-synchronicity between their local oscillators affect the mutual relation between the transmit signal and the receive signal in qualitatively the same way.

In the case of relative frequency drift, a local oscillator of at least one of the terminals of the FMCW radar system suffers from an unintended, arbitrary offset from its nominal or reference frequency. Where multiple local oscillators suffer from frequency drift, the respective offsets are unequal. For instance, if, in the situation depicted in Fig. 1, the local oscillator of terminal B suffers from a negative-offset frequency drift, the entire replica it generates is moved to lower frequencies. Hence, just like a relative radial velocity between the terminals gives rise to a Doppler frequency-shift of magnitude $f_{Doppler}$, a relative frequency drift gives rise to a frequency-shift of magnitude $f_{offset}$. The left graph of Fig. 3 graphically illustrates how the Doppler frequency-shift of magnitude $f_{Doppler}$ and the frequency-shift of magnitude $f_\tau$ due to frequency drift affect the mutual relation between the transmit and the receive signal.

To determine the distance and/or relative radial velocity between two FMCW radar terminals A and B, while taking account of the effects of a-synchronicity and relative frequency drift, the presently disclosed method proposes a procedure involving two consecutive measurement cycles in which the terminals A and B exchange FMCW radar signals with each other. The FMCW radar signal is periodic and comprised of a repetition of an FMCW radar pulse that may comprise two linear FM sweeps, preferably in the form of an up-chirp and a down-chirp. An example of such a pulse is the triangular pulse considered above, which is particularly convenient due to the symmetry between its rising and falling edges. The first measurement cycle may comprise the following steps:

(i) terminal A transmits a first locally generated FMCW transmit signal to terminal B;
(ii) terminal B receives the transmit signal from terminal A as a first receive signal, and mixes it with a locally generated replica of the first FMCW transmit signal to produce a first beat signal;
(iii) the frequency spectrum of the first beat signal is analyzed to obtain values for the frequency differences $\Delta f_{up,A}$, $\Delta f_{down,A}$ between, respectively, the rising and falling flanks of the first transmit signal and the first receive signal.

The second measurement cycle may be essentially the reverse of the first, and comprises the following steps:

(i) terminal B transmits a second locally generated FMCW transmit signal to terminal A;
(ii) terminal A receives the transmit signal from terminal B as a second receive signal, and mixes it with a locally generated replica of the second FMCW transmit signal to produce a second beat signal;
(iii) the frequency spectrum of the second beat signal is analyzed to obtain values for the frequency differences $\Delta f_{up,B}$, $\Delta f_{down,B}$ between, respectively, the rising and falling flanks of the second transmit signal and the second receive signal.

Fig. 4 schematically illustrates the effects of distance, relative velocity, a-synchronicity and frequency drift between the terminals A and B on the frequency differences $\Delta f_{up}$, $\Delta f_{down}$ between the rising and falling edges of the transmit and receive signals for both the first measurement cycle (left side) and the second measurement cycle (right side). The distance between the terminals A and B, their relative velocity, a-synchronicity and frequency drift result in respective frequency differences with magnitudes of $f_{range}$, $f_{Doppler}$, $f_\tau$ and $f_{offset}$. Because the FMCW transmit signal is not replicated and sent back in either of the measurement cycles as it is during normal radar operation, $f_{range}$ is now proportional to the time it takes the signal to cover the one-way distance between the terminals A and B. Similarly, $f_{Doppler}$ is equal to once the Doppler frequency, etc. Without loss of generality, the depicted time- and frequency-shifts reflect a situation in which terminals A and B move towards each other, terminal B's oscillator lags behind A's, and a relative frequency drift causes terminal B's signals to be shifted down in frequency compared to those of terminal A. The sign indications for the magnitudes of the different frequency-shifts in the figure are relative.

By superposing the effects illustrated in Fig. 4, the following equations with relative signs may be obtained for the first measurement cycle (during which terminal A receives and terminal B transmits):

$$\Delta f_{up,A} = -f_{offset} + f_{Doppler} - f_{range} + f_\tau$$
$$\Delta f_{down,A} = -f_{offset} + f_{Doppler} + f_{range} - f_\tau \tag{3}$$

while similar equations may be obtained for the second measurement cycle (during which terminal B receives and terminal A transmits):

$$\Delta f_{up,B} = +f_{offset} + f_{Doppler} - f_{range} - f_{\tau}$$
$$\Delta f_{down,B} = +f_{offset} + f_{Doppler} + f_{range} + f_{\tau}$$

(4)

Eq.(3) and (4) form a set of four equations with four unknowns. Solving the set for the unknowns yields:

$$f_{range} = \frac{(\Delta f_{down,A} - \Delta f_{up,A}) + (\Delta f_{down,B} - \Delta f_{up,B})}{4}$$

(5)

$$f_{Doppler} = \frac{\Delta f_{down,A} + \Delta f_{up,A} + \Delta f_{down,B} + \Delta f_{up,B}}{4}$$

(6)

$$f_{\tau} = \frac{(\Delta f_{down,B} - \Delta f_{up,B}) - (\Delta f_{down,A} - \Delta f_{up,A})}{4}$$

(7)

$$f_{offset} = \frac{(\Delta f_{down,B} + \Delta f_{up,B}) - (\Delta f_{down,A} + \Delta f_{up,A})}{4}$$

(8)

Eq.(5)-(8) indicate that if the values for $\Delta f_{up,A}$, $\Delta f_{down,A}$, $\Delta f_{up,B}$ and $\Delta f_{down,B}$ obtained during the first and second measurement cycles, respectively, are combined, e.g. by having one terminal A, B transmit its values to the other or by having both terminals A, B transmit their values to a common, third terminal, $f_{range}$, $f_{Doppler}$, $f_{\tau}$ and $f_{offset}$ may all be calculated.

The value of $f_{range}$ may be directly related to the distance $R$ between the two terminals A and B by the FMCW radar equation:

$$f_{range} = \frac{B_{sweep}}{T_{sweep}} \frac{R}{c},$$

(9)

wherein $B_{sweep}$ is the sweep bandwidth of the up- and down chirps in the triangular pulse [Hz], $T_{sweep}$ is the duration of the up- and down chirps in the triangular pulse [s], $R$ is the distance between the two terminals A and B [m], and c is the speed of light in the relevant medium [m/s], which may typically be air or vacuum, e.g. in the case of space radar systems.

In addition, $f_{Doppler}$ may be directly related to the relative radial velocity $v_{rad,A-B}$ [m/s] between terminals A and B. If the triangular pulse in the employed FMCW radar signals is assumed to be centered on a frequency $f_0$ [Hz], and its bandwidth is assumed to be small relative to *fo*, the relationship may be approximated as:

$$f_{Doppler} \approx \frac{v_{rad,A-B}}{c} f_0.$$

(10)

Substituting eq.(10) in eq.(8) yields the relative radial frequency $v_{rad,A-B}$ [m/s] between terminals A and B as a function of the obtained values for $\Delta f_{up,A}$, $\Delta f_{down,A}$, $\Delta f_{up,B}$ and $\Delta f_{down,B}$:

$$v_{rad,A-B} = \frac{\Delta f_{up,A} + \Delta f_{up,B} + \Delta f_{down,A} + \Delta f_{down,B}}{4 f_0} c.$$

(11)

This way, the distance $R$ and relative radial velocity $v_{rad,A-B}$ between two FMCW radar terminal may be determined despite the fact that their local oscillators are a-synchronous and/or include a relative frequency drift. The presently disclosed method may be generally applied to active FMCW radar system, such as, for example, distributed Synthetic Aperture Radar (SAR) satellite systems.

As regards the terminology used in this text, the following may be noted. The term 'radar pulse' may be construed to refer to a *variation* in a characteristic of a continuous radar signal, e.g. a variation in the frequency of the radar signal, from a baseline value to a higher or lower value, followed by a turn to the baseline value. The radar pulse may, for instance, include a linear up-chirp and/or a linear down-chirp. Hence, the term 'radar pulse' does not necessarily refer to a discrete radar pulse that exists in isolation, and separate from a continuous radar signal onto which it may be modulated. Where desired, the term 'radar pulse' may be replaced with, for instance, 'wave' or 'waveform'.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

## Claims

1. A method of determining the distance between and/or relative velocity of a first FMCW radar terminal A and a second FMCW radar terminal B, comprising two measurement cycles, during the first of which:

   - terminal A transmits a first locally generated periodic FMCW transmit signal, comprised of a repetition of a radar pulse, to terminal B, each radar pulse including at least a linear up-chirp and a linear down-chirp. ; and
   - terminal B receives the first transmit signal from terminal A as a first receive signal, and mixes it with a locally generated replica of the first transmit signal to produce a first beat signal;

   and during the second of which:

   - terminal B transmits a second locally generated periodic FMCW transmit signal, comprised of a repetition of a radar pulse, to terminal A, each radar pulse including at least a linear up-chirp and a linear down-chirp; and
   - terminal A receives the second transmit signal from terminal A as a second receive signal, and mixes it with a locally generated replica of the second transmit signal to produce a second beat signal;

   and wherein the method further comprises:

   - analyzing the frequency spectra of the first and second beat signals to determine their beat frequencies ($\Delta f_{up,A}$, $\Delta f_{down,A}$, $\Delta f_{up,B}$, $\Delta f_{down,B}$), and
   - calculating the distance (R) between and/or relative radial velocity ($v_{rad,A-B}$) of the FMCW radar terminals A and B from said determined beat frequencies;

   wherein the method is **characterized in that**:

   - analyzing the frequency spectrum of the first beat signal comprises determining two first beat frequencies ($\Delta f_{up,A}$, $\Delta f_{down,A}$) corresponding to frequency differences between, respectively, rising and falling flanks of the first transmit signal and its replica, and
   - analyzing the frequency spectrum of the second beat signal comprises determining two second beat frequencies ($\Delta f_{up,B}$, $\Delta f_{down,B}$) corresponding to frequency differences between, respectively, rising and falling flanks of the second transmit signal and its replica.

2. The method according to claim 1, wherein said radar pulse includes a triangular frequency-to-time characteristic.

3. The method according to any of the claims 1-2, wherein the beat frequencies ($\Delta f_{up,A}$, $\Delta f_{down,A}$) of the first beat signal are determined by terminal B, and the beat frequencies of the second beat signal ($\Delta f_{up,B}$, $\Delta f_{down,B}$) are determined by terminal A, and wherein terminal B communicates the beat frequencies of the first beat signal to terminal A and/or terminal A communicates the beat frequencies of the second beat signal to terminal B.

4. The method according to any of the preceding claims, wherein the distance R between the FMCW radar terminals A and B is calculated from said determined beat frequencies $\Delta f_{up,A}$, $\Delta f_{down,A}$, $\Delta f_{up,B}$, $\Delta f_{down,B}$ according to the equation:

$$R = \left(\frac{T_{sweep}}{B_{sweep}}\right)\left(\frac{(\Delta f_{down,A} - \Delta f_{up,A}) + (\Delta f_{down,B} - \Delta f_{up,B})}{4}\right) \cdot c \quad,$$

wherein $B_{sweep}$ is a sweep bandwidth of the up- and down chirps in the FMCW radar pulse, $T_{sweep}$ is a duration of the up- and down chirps in the triangular pulse, $R$ is the distance between the two terminals A and B, and $c$ is a speed of light in the relevant medium.

5. The method according to any of the preceding claims, wherein the relative radial velocity $v_{rad,A\text{-}B}$ between the FMCW radar terminals A and B is calculated from said determined beat frequencies $\Delta f_{up,A}$, $\Delta f_{down,A}$, $\Delta f_{up,B}$, $\Delta f_{down,B}$ according to the equation:

$$v_{rad,A-B} = \frac{\Delta f_{up,A} + \Delta f_{up,B} + \Delta f_{down,A} + \Delta f_{down,B}}{4f_0} c \,,$$

wherein $f_0$ is an average center frequency of the FMCW transmit signals, and $c$ is a speed of light in the relevant medium.

6. The method according to any of the claims 1-5, wherein terminal A and B both include a respective local oscillator (100, 200) for locally producing said respective transmit signals and replica's, and
wherein terminal A's oscillator (100) and terminal B's oscillator (200) are non-synchronous and/or subject to a relative frequency drift.

## Patentansprüche

1. Verfahren zur Bestimmung der Entfernung zwischen und/oder der relativen Geschwindigkeit von einem ersten FMCW-Radarendgerät A und einem zweiten FMCW-Radarendgerät B, umfassend zwei Messzyklen, während des ersten von denen:

- Endgerät A ein erstes lokal erzeugtes periodisches FMCW-Sendesignal, umfassend eine Wiederholung eines Radarimpulses, an Endgerät B sendet, jeder Radarimpuls umfassend mindestens einen linearen Upchirp-Impuls und einen linearen Downchirp-Impuls; und
- Endgerät B das erste Sendesignal von Endgerät A als ein erstes Empfangssignal empfängt und es mit einer lokal erzeugten Kopie des ersten Sendesignals mischt, um ein erstes Schwebungssignal (engl. beat signal) zu produzieren;

und während des zweiten von denen:

- Endgerät B ein zweites lokal erzeugtes periodisches FMCW-Sendesignal, umfassend eine Wiederholung eines Radarimpulses, an Endgerät A sendet, jeder Radarimpuls umfassend mindestens einen linearen Upchirp-Impuls und einen linearen Downchirp-Impuls; und
- Endgerät A das zweite Sendesignal von Endgerät A als ein zweites Empfangsgerät empfängt und es mit einer lokal erzeugten Kopie des zweiten Sendesignals mischt, um ein zweites Schwebungssignal zu produzieren;

und wobei das Verfahren ferner Folgendes umfasst:

- das Analysieren der Frequenzspektra des ersten und zweiten Schwebungssignals, um deren Schwebungsfrequenzen ($\Delta f_{up,A}$, $\Delta f_{down,A}$, $\Delta f_{up,B}$, $\Delta f_{down,B}$) zu bestimmen, und
- das Berechnen der Entfernung (R) zwischen und/oder der relativen radialen Geschwindigkeit ($u_{rad,A\text{-}B}$) von den FMCW-Radarendgeräten A und B anhand der bestimmten Schwebungsfrequenzen;

wobei das Verfahren **dadurch gekennzeichnet ist, dass**:

- das Analysieren des Frequenzspektrums des ersten Schwebungssignals das Bestimmen von zwei ersten Schwebungsfrequenzen ($\Delta f_{up,A}$, $\Delta f_{down,A}$) umfasst, die Frequenzunterschiede zwischen jeweils steigenden und fallenden Flanken des ersten Sendesignals und seiner Kopie entsprechen, und
- das Analysieren des Frequenzspektrums des zweiten Schwebungssignals das Bestimmen von zwei zweiten Schwebungsfrequenzen ($\Delta f_{up,B}$, $\Delta f_{down,B}$) umfasst, die Frequenzunterschieden zwischen jeweils steigenden und fallenden Flanken des zweiten Sendesignals und seiner Kopie entsprechen.

2. Verfahren nach Anspruch 1, wobei der Radarimpuls ein dreieckiges Frequenz-zu-Zeit-Merkmal umfasst.

3. Verfahren nach einem der Ansprüche 1-2, wobei die Schwebungsfrequenzen ($\Delta f_{up,A}$, $\Delta f_{down,A}$) des ersten Schwebungssignals von Endgerät B bestimmt werden und die Schwebungsfrequenzen des zweiten Schwebungssignals ($\Delta f_{up,B}$, $\Delta f_{down,B}$) von Endgerät A bestimmt werden, und wobei Endgerät B die Schwebungsfrequenzen des ersten Schwebungssignals an Endgerät A kommuniziert und/oder Endgerät A die Schwebungsfrequenzen des zweiten Schwebungssignals an Endgerät B kommuniziert.

4. Verfahren nach einem der vorhergehenden Ansprüche, wobei die Entfernung R zwischen den FMCW-Radarendgeräten A und B anhand der bestimmten Schwebungsfrequenzen $\Delta f_{up,A}$, $\Delta f_{down,A}$, $\Delta f_{up,B}$, $\Delta f_{down,B}$ bestimmt wird gemäß der Gleichung:

$$R = \left( \frac{T_{sweep}}{B_{sweep}} \right) \left( \frac{(\Delta f_{down,A} - \Delta f_{up,A}) + (\Delta f_{down,B} - \Delta f_{up,B})}{4} \right) \cdot c \ ,$$

wobei $B_{sweep}$ eine Abtastbandbreite der Up- und Downchirps in dem FMCW-Radarimpuls ist, $T_{sweep}$ eine Dauer der Up- und Downchirps in dem dreieckigen Impuls ist, $R$ die Entfernung zwischen den zwei Endgeräten A und B ist und $c$ eine Geschwindigkeit von Licht in dem relevanten Medium ist.

5. Verfahren nach einem der vorhergehenden Ansprüche, wobei die relative radiale Geschwindigkeit $u_{rad,A-B}$ zwischen den FMCW-Radarendgeräten A und B berechnet wird anhand der bestimmten Schwebungsfrequenzen $\Delta f_{up,A}$, $\Delta f_{down,A}$, $\Delta f_{up,B}$, $\Delta f_{down,B}$ gemäß der Gleichung:

$$v_{rad,A-B} = \frac{\Delta f_{up,A} + \Delta f_{up,B} + \Delta f_{down,A} + \Delta f_{down,B}}{4 f_0} c \ ,$$

wobei $f_O$ eine durchschnittliche Mittenfrequenz des FMCW-Sendesignals ist und $c$ eine Geschwindigkeit von Licht in dem relevanten Medium ist.

6. Verfahren nach einem der Ansprüche 1-5, wobei Endgerät A und B beide einen entsprechenden lokalen Oszillator (100, 200) zum lokalen Produzieren der jeweiligen Sendesignale und Kopien umfassen, und wobei der Oszillator (100) von Endgerät A und der Oszillator (200) von Endgerät B nicht synchron sind und/oder einer relativen Frequenzdrift unterliegen.

**Revendications**

1. Méthode de détermination de la distance entre un premier terminal A radar FMCW et un second terminal B radar FMCW et/ou de la vitesse relative de ceux-ci, comprenant deux cycles de mesure, pendant le premier :

- le terminal A transmet au terminal B un premier signal de transmission périodique FMCW généré localement, composé d'une répétition d'une impulsion radar, chaque impulsion radar comprenant au moins un chirp croissant linéaire et un chirp décroissant linéaire ; et
- le terminal B reçoit le premier signal de transmission du terminal A en tant que premier signal de réception, et le mélange avec une réplique générée localement du premier signal de transmission pour produire un premier signal de battement ;

et pendant le second :

- le terminal B transmet au terminal A un second signal de transmission périodique FMCW généré localement, composé d'une répétition d'une impulsion radar, chaque impulsion radar comprenant au moins un chirp croissant linéaire et un chirp décroissant linéaire ; et
- le terminal A reçoit le second signal de transmission du terminal A en tant que second signal de réception, et le mélange avec une réplique générée localement du second signal de transmission pour produire un second signal de battement ;

et dans lequel le procédé comprend en outre :

- l'analyse des spectres de fréquence des premier et second signaux de battement pour déterminer leurs fréquences de battement ($\Delta f_{up,A}$, $\Delta f_{down,A}$, $\Delta f_{up,B}$, $\Delta f_{down,B}$), et
- le calcul de la distance ($R$) entre les terminaux A et B radar FMCW et/ou la vitesse radiale relative ($v_{rad,A-B}$) de ceux-ci à partir desdites fréquences de battement déterminées;

dans laquelle la méthode est **caractérisée en ce que** :

- l'analyse du spectre de fréquence du premier signal de battement comprend la détermination de deux premières fréquences de battement ($\Delta f_{up,A}$, $\Delta f_{down,A}$) correspondant à des différences de fréquence entre, respectivement, des flancs montant et descendant du premier signal de transmission et de sa réplique, et
- l'analyse du spectre de fréquence du second signal de battement comprend la détermination de deux secondes fréquences de battement ($\Delta f_{up,B}$, $\Delta f_{down,B}$) correspondant à des différences de fréquence entre, respectivement, les flancs montant et descendant du second signal de transmission et de sa réplique.

2. Méthode selon la revendication 1, dans laquelle ladite impulsion radar comprend une caractéristique triangulaire fréquence-temps.

3. Méthode selon l'une quelconque des revendications 1 et 2, dans laquelle les fréquences de battement ($\Delta f_{up,A}$, $\Delta f_{down,A}$) du premier signal de battement sont déterminées par le terminal B, et les fréquences de battement du second signal de battement ($\Delta f_{up,B}$, $\Delta f_{down,B}$) sont déterminées par le terminal A, et dans laquelle le terminal B communique les fréquences de battement du premier signal de battement au terminal A et/ou le terminal A communique les fréquences de battement du second signal de battement au terminal B.

4. Méthode selon l'une quelconque des revendications précédentes, dans laquelle la distance R entre les terminaux A et B radar FMCW est calculée à partir desdites fréquences de battement déterminées $\Delta f_{up,A}$, $\Delta f_{down,A}$, $\Delta f_{up,B}$, $\Delta f_{down,B}$ conformément à l'équation :

$$R = \left( \frac{T_{sweep}}{B_{sweep}} \right) \left( \frac{(\Delta f_{down,A} - \Delta f_{up,A}) + (\Delta f_{down,B} - \Delta f_{up,B})}{4} \right) \cdot c \ ,$$

où $B_{sweep}$ est une bande passante de balayage des chirps croissant et décroissant de l'impulsion radar FMCW, $T_{sweep}$ est une durée des chirps croissant et décroissant de l'impulsion triangulaire, $R$ est la distance entre les deux terminaux A et B, et $c$ est une vitesse de la lumière dans le milieu d'intérêt.

5. Méthode selon l'une quelconque des revendications précédentes, dans laquelle la vitesse radiale relative $v_{rad,A.B}$ entre les terminaux A et B radar FMCW est calculée à partir desdites fréquences de battement déterminées $\Delta f_{up,A}$, $\Delta f_{down,A}$, $\Delta f_{up,B}$, $\Delta f_{down,B}$ conformément à l'équation :

$$v_{rad,A-B} = \frac{\Delta f_{up,A} + \Delta f_{up,B} + \Delta f_{down,A} + \Delta f_{down,B}}{4 f_0} c \ ,$$

où $f_0$ est une fréquence centrale moyenne des signaux de transmission FMCW, et c est une vitesse de la lumière dans le milieu d'intérêt.

6. Méthode selon l'une quelconque des revendications 1 à 5, dans laquelle les terminaux A et B comprennent tous deux un oscillateur local respectif (100, 200) pour produire localement lesdits signaux de transmission respectifs et leurs répliques, et
dans lequel l'oscillateur (100) du terminal A et l'oscillateur (200) du terminal B sont non synchrones et/ou soumis à une dérive de fréquence relative.

Fig. 1

$f_{doppler}$

$f_{offset}$

$f_{range}$

$f_{\tau}$

Fig. 3

$\tau$

f (Hz)

$f_0$

$\Delta f_{up}$  $\Delta f_{down}$

t (s)

Fig. 2

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010019975 A1, Stelzer